(19) Europäisches Patentamt
European Patent Office
Office européen des brevets

(11) **EP 4 692 856 A1**

(12) **EUROPEAN PATENT APPLICATION**

(43) Date of publication:
**11.02.2026 Bulletin 2026/07**

(21) Application number: **24193516.2**

(22) Date of filing: **08.08.2024**

(51) International Patent Classification (IPC):
**G01S 19/39** (2010.01)     **G01S 19/42** (2010.01)
**G01S 5/00** (2006.01)

(52) Cooperative Patent Classification (CPC):
**G01S 19/428; G01S 5/011; G01S 19/393;**
G01S 19/22

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(71) Applicant: **Trimble Inc.**
**Westminster, CO 80021 (US)**

(72) Inventor: **Talbot, Nicholas Charles**
**Ashburton, Victoria, 3147 (AU)**

(74) Representative: **Hoffmann Eitle**
**Patent- und Rechtsanwälte PartmbB**
**Arabellastraße 30**
**81925 München (DE)**

(54) **METHODS AND SYSTEMS FOR POSITIONING PURPOSES IN THE PRESENCE OF MULTIPATH**

(57) Some embodiments pertain to methods carried out by a navigation satellite system (NSS) receiver for estimating parameters useful to determine a position. The receiver observes NSS signals from NSS satellites. Multipath-related information indicative of an expected or estimated level of multipath where the NSS receiver antenna(s) is located is obtained. A positively skewed distribution is then determined based on the multipath-related information. Further, an estimation process, referred to as "estimator", is operated, wherein the estimator uses state variables, computes the values of its state variables based on NSS code observations by the NSS receiver, and operates under an assumption that errors in the NSS code observations follow the determined skewed distribution. Systems, vehicles, and computer programs are also disclosed.

Fig. 1

**Description**

**[Field of technology]**

The invention relates to methods, systems, and computer programs using navigation satellite system (NSS) observations for position estimation, trajectory estimation, or for other purposes. The fields of application of the methods, systems, and computer programs include, but are not limited to, geospatial positioning, navigation, highly automated driving, autonomous driving, mapmaking, land surveying, civil engineering, construction, agriculture, disaster prevention and relief, and scientific research.

**[Background]**

Navigation satellite systems (NSS) include both global navigation satellite systems (GNSS) and regional navigation satellite systems (RNSS), such as the Global Positioning System (GPS) (United States), GLONASS (Russia), Galileo (Europe), BDS (China), QZSS (Japan), the Indian Regional Navigational Satellite System (IRNSS, also referred to as NAVIC) (systems in use or in development), and are also intended to be inclusive of both MEO-PNT and LEO-PNT navigation satellite systems. An NSS typically uses a plurality of satellites orbiting the Earth. The plurality of satellites forms a constellation of satellites. An NSS receiver detects a code modulated on an electromagnetic signal broadcast by a satellite. The code is also called a ranging code. Code detection includes comparing the bit sequence modulated on the broadcasted signal with a receiver-side version of the code to be detected. Based on the detection of the time of arrival of the code for each of a series of the satellites, the NSS receiver estimates its position. Positioning includes, but is not limited to, geolocation, i.e. the positioning on the surface of the Earth.

An overview of GPS, GLONASS, and Galileo is provided for example in sections 9, 10, and 11 of ref. [1] (a list of references is provided at the end of the present description, after a list of abbreviations and acronyms).

Positioning may be done using NSS signal codes and/or carrier signals. That is, carrier signals transmitted by the NSS satellites can also be tracked to provide an alternative, or complementary way of determining the range, or change in range between the receiver and satellite. Carrier phase measurements from multiple NSS satellites may facilitate estimation of the position of the NSS receiver.

GNSS observation equations for code observations and for carrier phase observations are for example provided in ref. [1], section 5. The person skilled in the art will recognize that the same or similar principles apply to RNSS.

The main GNSS observables are therefore the code (pseudorange) and the carrier phase. These observables enable a user to obtain the geometric distance from the receiver to the satellite. With known satellite position and satellite clock error, the receiver position and receiver clock error can be estimated.

There is a constant need for improving positioning or similar systems making use of NSS observables.

**[Summary]**

The present invention aims at addressing the above-mentioned need. The invention includes methods, systems, computer programs, computer program products, and storage mediums as defined in the independent claims. Particular embodiments are defined in the dependent claims.

In one embodiment, a method is carried out by at least one of: (i) a NSS receiver and (ii) a processing entity capable of receiving data from the NSS receiver, the method being for estimating parameters useful to, i.e. suitable to, determine a position. The NSS receiver observes NSS signals from each of a plurality of NSS satellites. The method comprises the following steps and/or operations. Information, hereinafter referred to as "multipath-related information", indicative of an expected or estimated level of multipath where the NSS receiver antenna(s) is located is obtained. A positively skewed distribution is determined based on the multipath-related information. An estimation process, hereinafter referred to as "estimator", is operated, wherein the estimator uses state variables, computes the values of its state variables at least based on NSS code observations by the NSS receiver, and operates under an assumption that errors in the NSS code observations follow the determined positively skewed distribution.

The above-described method has been found to be generally beneficial for processing NSS code observations to produce accurate positioning results even in the presence of multipath.

In one embodiment, a system comprises at least one of: a NSS receiver, and a processing entity capable of receiving data from the NSS receiver, the system being for estimating parameters useful to, i.e. suitable to, determine a position, the NSS receiver being configured for observing NSS signals from each of a plurality of NSS satellites, and the system being configured for carrying out the above-described method. In one embodiment, a vehicle comprises such a system.

In some embodiments, computer programs, computer program products and/or storage media for storing such computer programs are provided. Such computer programs comprise computer-executable instructions configured for carrying out, when executed on a computer such as one embedded in, or otherwise part of, a NSS receiver or in another apparatus, or when executed on a set of computers such as a set of computers embedded in, or otherwise part of, a set of apparatuses or devices, the above-described method.

**[Brief description of the drawings]**

Embodiments of the present invention shall now be described in conjunction with the appended drawings in which:

Fig. 1 is a flowchart of a method in one embodiment of the invention;
Fig. 2 illustrates the probability density function (PDF) for a skewed student-t distribution with different parameters;
Fig. 3 shows GNSS code errors (i.e., code residuals in meters) as a function of time for an example of urban tracking environment;
Fig. 4 shows the distribution of the code errors for the experiment described with reference to in Fig. 3;
Fig. 5 shows three examples of symmetric weighting functions and an example of a new skewed weighting function;
Fig. 6 shows examples of symmetric Huber functions and corresponding skewed Huber functions;
Fig. 7 shows examples of symmetric Welsh functions and corresponding skewed Welsh functions;
Fig. 8 shows examples of symmetric bisquare functions and corresponding skewed bisquare functions; and
Fig. 9 schematically illustrates a system in one embodiment of the invention.

**[Detailed description]**

The present invention shall now be described in conjunction with specific embodiments. These serve to provide the skilled person with a better understanding but are not intended to in any way restrict the scope of the invention, which is defined by the appended claims. In particular, the embodiments described throughout the description can be combined to form further embodiments to the extent that they are not mutually exclusive.

Throughout the following description, the abbreviation "GNSS" is sometimes used. The invention is, however, not limited to global navigation satellite systems (GNSS) but also applies to regional navigation satellite systems (RNSS). Thus, it is to be understood that each occurrence of "GNSS" in the following can be replaced with "RNSS" to form additional embodiments. In addition, as mentioned above in the "Background" section, the term "NSS" is here intended to cover many types of embodiments, and those may also include embodiments involving MEO-PNT and/or LEO-PNT navigation satellite systems.

In the art, the term "observables" is often used to refer to structures of an NSS signal from which observations or measurements can be made (PRN-code, carrier phase, Doppler, SNR) (see e.g. ref. [2]: "The word *observable* is used throughout GPS literature to indicate the signals whose measurement yields the range or distance between the satellite and the receiver."). However, in common usage, and in the present document, the term "observable" (also referred to as "NSS observable") is also interchangeably used to refer to the observation itself, such that, for example, "code observable" has the same meaning as "code observation", and "carrier phase observable" has the same meaning as "carrier phase observation". Further, when the present document describes that an NSS signal is observed, this means that at least one observation (measurement) of at least one observable of the NSS signal is made.

When the term "real-time" is used in the present document, it means that an action is performed (e.g., data is received, processed or transmitted, results are computed) as soon as the required information for that action is available. Thus, certain latency exists, which depends on various aspects depending on the involved component(s) of the system.

When the verb "broadcast" (and "broadcasting", etc.) is used, this also covers embodiments where the transmission is a form of multicasting.

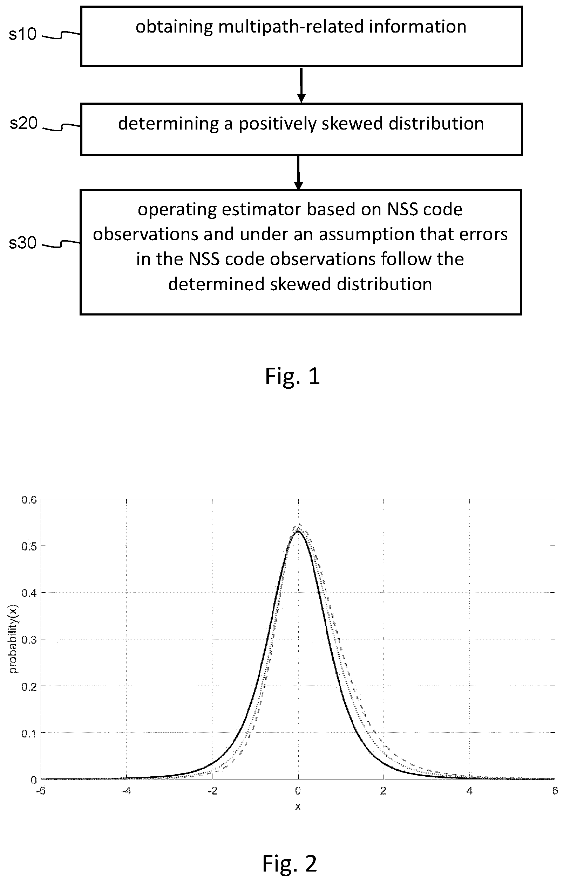

Fig. 1 is a flowchart of a method in one embodiment of the invention. The method may be carried out by a NSS receiver configured for observing NSS signals from a plurality of NSS satellites over multiple epochs, by another processing entity capable of receiving data from the NSS receiver, or by an NSS receiver in conjunction with such other processing entity (i.e., by an NSS receiver and another processing entity). The processing entity may be located remotely from the NSS receiver and may, for example, receive data representing the NSS observations from the NSS receiver.

In one embodiment, the method aims at estimating parameters useful to (i.e., suitable to) determine (i.e., estimate) a position, such as a position of a rover receiver (also called "rover system" or simply "rover") or of a reference station. The method may eventually lead to estimating a rover position or reference station position. In one embodiment, the estimated position is an absolute position in a reference frame attached to the Earth. In one embodiment, the estimated position is a position relative to a reference point or initial point, whose absolute position need not necessarily be precisely known, and the method may aim at estimating a trajectory relative to the reference point or initial point.

The estimated parameters may for example indicate the most probable number of carrier cycles along the distance separating an NSS satellite from the NSS receiver, i.e. the estimated parameters may be the resolved integer ambiguity (an introduction to the GNSS integer ambiguity resolution problem, and its conventional solutions, is provided in ref. [1], section 7.2). This also means that the method may estimate the position itself but not necessarily: parameters may be estimated that may be used, for example by another entity (such as a processing entity on a server dedicated to such task), to estimate or determine the position of the NSS receiver (e.g., a rover receiver) or of a reference station. Furthermore, other parameters such as, for example, properties of the ionosphere may be estimated. Indeed, if the position of both the NSS receiver and the plurality of NSS satellites are known, resolving the integer ambiguities may enable the determination of parameters affecting the transmission of the signals (or some components thereof) through the ionosphere or other parts of the atmosphere. Doing so is useful for example for generating a correction stream to be broadcasted to users (see e.g. refs. [3] and [4]).

Yet furthermore, beyond determining the position of a rover or a reference station, if the position of NSS receivers (such as reference stations) is known, solving the integer ambiguities in the carrier phases by solving observation equations may also be used to eventually estimate the position of a satellite.

The application relying on NSS observations to produce an estimate of said parameters, or a combination thereof, may for example be a highly automated driving or autonomous driving application relying on NSS observations to produce an estimate of the position, velocity, or acceleration of a vehicle.

In step s10, information, here referred to as "multipath-related information", indicative of an expected or estimated level, i.e. an amount and/or degree, of multipath where the NSS receiver antenna (or antennas) is (or are) located is obtained. Multipath refers to situations in which multiple versions of an electromagnetic signal originating from a given satellite antenna reach the NSS receiver antenna (see for example ref. [1], section 5.6.1 titled "General remarks"). The multiple versions of the signal typically arrive at the NSS receiver antenna with different delays. Further, as noted in ref. [1], p. 155, "[...] code ranges are more affected by multipath than carrier phases".

The expected or estimated level of multipath where the NSS receiver antenna(s) is located, i.e. at the point where the NSS receiver antenna(s) is located and/or in the environment where the NSS receiver antenna(s) is located, may be obtained for example by estimation of the level of multipath based on characteristics of the received NSS signals, by environment classification (e.g., by automatic detection of characteristics of the environment using a camera), and/or by receiving and using input from the NSS receiver's user (the operator or the like).

The frequency with which the multipath-related information is obtained may depend on how mobile the NSS receiver is expected to be and/or the extent to which the environment surrounding the NSS receiver is expected to change. If the NSS receiver is expected to be stationary throughout its lifetime (e.g., always attached to a building, a bridge, or a similar stationary structure) and the environment surrounding the NSS receiver is not expected to change either (so that the level of multipath is not expected to change), an initial configuration step may be undertaken to set up the multipath-related information into the NSS receiver or into the processing entity capable of receiving data from the NSS receiver. In contrast, if the NSS receiver is expected to be mobile and/or if the environment surrounding the NSS receiver is expected to change, the multipath-related information may be obtained at a frequency equal for example to at any one of: 1/60 Hz (i.e., every minute), 1/30 Hz (i.e., every 30 seconds), 1 Hz (i.e., every second), 5 Hz, 10 Hz, 50 Hz, and 100 Hz. In one embodiment, the multipath-related information is obtained periodically. In one embodiment, the multipath-related information is obtained non-periodically, for example depending on detected events, such a detected movement of the NSS receiver, a detected change in the environment of the NSS receiver, and/or a detected input by a user.

In one embodiment, the obtained multipath-related information is or is based on at least one of: (i) a signal-to-noise ratio (SNR); (ii) a carrier-to-noise ratio (CNR); (iii) code-carrier residuals; (iv) code-code residuals; and (v) a measure of distortion in a correlation function formed from a received code signal and a local replica.

Regarding element (iii), i.e. "code-carrier residuals", code-carrier combinations refer to a linear combination of code and carrier observations collected on one or more frequency bands at a particular epoch. Continuous carrier phase observations provide a measure of the change in range between user antenna (NSS receiver antenna) and satellite over time. Code observations provide a similar measure of user-satellite range, albeit with roughly 2 to 3 orders of magnitude more noise than carrier phase observations. The linear combination of code and carrier phase observations enables user-satellite geometry to be removed, so too satellite and receiver clock and tropospheric errors, leaving predominantly code multipath errors. The statistical dispersion of code-carrier combination data measured over time is useful for assessing the level of code noise and level of code multipath. Code-carrier combinations may be formed from single-frequency or multiple-frequency code and/or carrier phase observations. The advantage of multiple-frequency code-carrier combinations is that the effect of ionospheric bias can be reduced or removed. Examples of code-carrier combinations include: L1 code minus L1 carrier-phase; dual-frequency iono-free code minus dual-frequency iono-free carrier-phase; dual-frequency narrow-lane code minus dual-frequency wide-lane carrier phase.

Regarding element (iv), code-code residuals refer to the difference formed from code observations on different frequency bands to a common satellite. Code observations on different frequencies tend to have multipath errors that are not time synchronous. Therefore, by differencing code observations on different frequency bands, geometric range, satellite clock, receiver clock and tropospheric errors are removed, leaving code multipath errors. The statistical dispersion of code-code observations yields a measure of the prevailing code noise and multipath errors.

Regarding element (v), the obtained multipath-related information may be or may be based on a measure of distortion in a correlation function formed from a received code signal and a local replica in the knowledge that the more distortion there is, the more multipath there is.

Elements (i) to (v) may each be regarded as usable as, or as a basis for deriving, a measure of the level of multipath affecting the NSS receiver at one point in time.

In one embodiment, the multipath-related information comprises information indicative of a type of environment where the NSS receiver antenna(s) is located. For example, the type of environment may be one among a group of types comprising at least: urban, suburban, and countryside.

In one embodiment, obtaining the multipath-related information comprises environment classification using at least one of: data from a camera (i.e., vision-based environment classification); and a three-dimensional scene model. That is, non-GNSS related sensors may be used for multipath level assessment and classification. A three-dimensional scene model of the environment where the NSS receiver antenna(s) is located may for example be obtained from an external service provider. For example, three-dimensional scene models of GNSS Foresight of Spirent, based in West Sussex, United Kingdom, and Google Earth Pro may be used to derive line-of-sight information, for environment classification. In one embodiment, ray tracing is used to determine the likely multiple paths by which GNSS signals can arrive at an antenna. Some assumptions may be made regarding the reflectivity of each building surface and other objects that may contribute to signal reflections.

Environment classification may alternatively, or additionally, be performed based on artificial intelligence using a trained machine learning (ML) model. In one embodiment, one or more inputs among: (A) GNSS related observation data (i)-(v) above, (B) satellite elevation angle, (C) vision sensor data, and (D) three-dimensional scene model, are used as input(s) to a neural network, with outputs including one or more among: (E) a quality of the GNSS tracking environment, (F) a level of code multipath, and (G) a description of the code error distribution. Training data can be gathered from GNSS receivers operated in a variety of indicative tracking environments. That is, the ML model may be trained on labelled data providing correlations between input data of the types (A) to (D) and output data of the types (E) to (G). Labelled data means that it is known how the input data correlates with the output data. Specifically, during training the true location of the GNSS receiver in each environment can be determined by pre-survey, via an external mobile survey device such as the Applanix POS LV system (available from Trimble Applanix, Richmond Hill, Ontario, Canada), and/or using carrier-phase based precise positioning techniques. With the location of the GNSS receiver accurately known to cm-level, at each epoch, code multipath errors can likewise be determined and therefore the quality of tracking environments can be classified for labelling purposes based on the dispersion of multipath errors affecting GNSS code observations as shown in Table 1:

Table 1. Example of classification of quality of tracking environments based on dispersion of multipath errors affecting GNSS code observations

| Environment | Level of Code Multipath [m] |
| --- | --- |
| Countryside / Open-Sky | < 0.5 |
| Suburban / Moderate | 0.5 - 5.0 |
| Urban / Poor | > 5 |

A number of neural network models are suitable for the multipath environment classification scheme, including: multiple-layer feedforward; convolutional neural network; and recurrent neural network. A supervised learning approach may be used to train the neural network.

In one embodiment, obtaining the multipath-related information comprises, or further comprises, using input from a user. For example, a user may be asked (i.e., prompted), through the NSS receiver's user interface or through a user interface of a processing entity communicably linked to the NSS receiver, to select a mode among a plurality of modes such as urban mode, suburban mode, and countryside mode (other and/or further modes may be used, i.e. the provided list of modes is not exhaustive). Allowing for external input from the user regarding the working environment is also a possible way to obtain the multipath-related information.

Turning again to the flowchart of Fig. 1, in step s20, a skewed distribution is determined, i.e. selected, based on the multipath-related information obtained in step s10. A distribution is skewed if it is asymmetric about the mean; that is if one tail of the distribution is longer than the other.

Specifically, a distribution that is positively skewed is determined, i.e. selected. A distribution is positively skewed if it tends to lean to the positive side of the mean (towards values larger than its mean). In other words, a distribution is positively skewed if its tail on the right (towards values larger than its mean) is longer (i.e., heavier) than its tail on the left (towards values smaller than its mean). Selecting a positively skewed distribution of errors is advantageous because the presence of multipath generally causes a positive bias effect, i.e. an overall delaying bias effect (a time-positive bias effect).

The skewness S of a distribution may for example be defined mathematically as follows:

$$S = \frac{\mu - \nu}{\sigma}$$

where $\mu$ is the mean, v is the median and $\sigma$ is the standard deviation of the population. If S is equal to 0, the distribution is not skewed. If S is larger than 0, the distribution is positively skewed. If S is smaller than 0, the distribution is negatively skewed. However, other measures of skewness of a distribution may alternatively be used, such as comparing quartiles either side of the mean. Importantly, the aim is to select a mathematical representation of the true error distribution of the data, including the level of positive skewness.

In one embodiment, in step s20, a positively skewed distribution is not only determined, but a degree of skewness is also determined, i.e., selected, depending on the obtained multipath-related information or characteristics thereof. Specifically, the more multipath there is (i.e., the higher the level of multipath), the larger the skewness should be (i.e., the more pronounced the skewness of the selected distribution should be).

The method thus provides an environment-adaptive technique for selecting the assumed distribution of errors to be used in the estimation process (discussed later in relation to step s30). The distribution under consideration here is the distribution of NSS code measurement errors. The distribution of code errors is generally assumed to vary as a function of satellite elevation angle. The method may switch from using a non-skewed distribution to using a positively skewed distribution in the presence of multipath, from using a positively skewed distribution to using a non-skewed distribution in the absence of multipath, or from using a first positively skewed distribution having first properties to using a second positively skewed distribution having second properties different from the first properties if the level of multipath changes.

The skewed distribution may be used to generate an optimal weighting function, as discussed below in section B.3. Examples of distributions that are skewed are also discussed in section B.3 below.

In one embodiment, the determined skewed distribution is one of: (a) a skewed normal distribution; (b) a skewed student t-distribution; (c) a skewed Laplace distribution; (d) a skewed Cauchy distribution; and (e) a skewed empirical distribution determined by a machine-learning technique. Ideally the determined skewed distribution selected should faithfully describe the actual NSS code measurement errors. In reality only an approximate representation of the stochastic behaviour of the NSS code measurements can be made. The choice between options (a) to (d) above may be based on practical considerations such as:

  i) Accuracy of the distribution for various tracking environments;
  ii) Number of parameters needed to describe the respective skewed distribution;
  iii) Ease with which the distribution can be estimated and stored; and
  iv) Complexity of the relationship between the skewed distribution and the corresponding weighting functions.

The aforementioned considerations tend to conflict with one another and therefore the type of skewed distribution may be selected to balance considerations i) to iv) above.

Table 2 summarises the properties of the skewed normal distribution (adapted from ref. [9]).

Table 2. Skewed normal distribution

| | Skewed Normal Distribution | |
|---|---|---|
| Parameters | $\mu$ location<br>$\sigma$ scale<br>$\lambda$ shape | |
| PDF | $$\frac{2}{\sigma} \phi \left( \frac{x - \mu}{\sigma} \right) \Phi \left( \lambda \left[ \frac{x - \mu}{\sigma} \right] \right)$$<br>$\phi(x)$ = standard normal probability density function (PDF)<br>$\Phi(x)$ = standard normal cumulative distribution function | |
| Mean | $$\mu + \sigma\delta\sqrt{\frac{2}{\pi}} \; ; \qquad \delta = \frac{\lambda}{\sqrt{1+\lambda^2}}$$<br>where | |

(continued)

|  | Skewed Normal Distribution |
|---|---|
| Variance | $$\sigma^2 \left( 1 - \frac{2\delta^2}{\pi} \right)$$ |
| Skewness | $$\frac{4 - \pi}{2} \frac{\left( \delta\sqrt{2/\pi} \right)^3}{(1 - 2\delta^2/\pi)^{3/2}}$$ |

Ref. [10] provides details on how the location, scale and shape parameters of the skew normal distribution can be estimated. In other words, ref. [10] provides details on how a probability density function (PDF) can be fitted to real data. Analogous techniques can be applied to fitting other PDFs to real data.

Table 3 presents the properties of the skewed Student-t distribution (adapted from ref. [11]):

Table 3. Skewed Student-t distribution

|  | Skewed Student-t Distribution |
|---|---|
| Parameters | $\mu$ location<br>$\sigma$ scale<br>$\lambda$ shape<br>p, q parameters that control kurtosis (p > 0, & q > 0) |
| PDF | $$\frac{p}{2v\sigma q^{\frac{1}{p}} B\left(\frac{1}{p}, q\right) \left[ 1 + \frac{|x - \mu + m|^p}{q(v\sigma)^p \left(1 + \lambda\, sgn(x - \mu + m)\right)^p} \right]^{\frac{1}{p}+q}}$$<br><br>B(.,.) = beta function<br>Where m & v are derived quantities used in the computation of the probability density function (PDF):<br><br>$$m = \lambda v\sigma \frac{2q^{\frac{1}{p}} B\left(\frac{2}{p}, q - \frac{1}{p}\right)}{B\left(\frac{1}{p}, q\right)};$$<br><br>$$v = \frac{q^{-\frac{1}{p}}}{\sqrt{(1 + 3\lambda^2)\frac{B\left(\frac{3}{p},\, q - \frac{2}{p}\right)}{B\left(\frac{1}{p},\, q\right)} - 4\lambda^2 \frac{B\left(\frac{2}{p},\, q - \frac{1}{p}\right)^2}{B\left(\frac{1}{p},\, q\right)^2}}}$$ |
| Mean | $$\mu + \frac{2v\sigma\lambda q^{\frac{1}{p}} B\left(\frac{2}{p},\, q - \frac{1}{p}\right)}{B\left(\frac{1}{p},\, q\right)} - m$$<br><br>(pq) > 1 |

(continued)

| | Skewed Student-t Distribution |
|---|---|
| Variance | $$(v\sigma)^2 q^{\frac{2}{p}}\left((1+3\lambda^2)\right)\frac{B\left(\frac{3}{p},\ q-\frac{2}{p}\right)}{B\left(\frac{1}{p},\ q\right)} - 4\lambda^2\frac{B\left(\frac{2}{p},\ q-\frac{1}{p}\right)^2}{B\left(\frac{1}{p},\ q\right)^2}$$ $$(pq) > 3$$ |
| Skewness | $$\frac{2q^{3/p}\lambda(v\sigma)^3}{B\left(\frac{1}{p},\ q\right)^3}\left[8\lambda^2 B\left(\frac{2}{p},q-\frac{1}{p}\right)^3 - 3(1+3\lambda^2)B\left(\frac{1}{p},q\right)\right.$$ $$\left. \times B\left(\frac{2}{p},q-\frac{1}{p}\right)B\left(\frac{3}{p},q-\frac{2}{p}\right) + 2(1+\lambda^2)B\left(\frac{1}{p},q\right)^2 B\left(\frac{4}{p},q-\frac{3}{p}\right)\right]$$ $$(pq) > 4$$ |

The probability density function (PDF) of the skewed generalized t-distribution is described by the location, scale, shape and kurtosis parameters: $\mu$, $\sigma$, $\lambda$, p, & q, respectively.

The skewed generalized t-distribution offers greater flexibility for describing NSS code observation error distributions under various operating conditions, compared to say the skewed normal distribution. The downside of the skewed generalized t-distribution is its computational complexity.

Fig. 2 illustrates the probability density function (PDF) for a skewed student-t distribution with the parameters defined in Table 4:

Table 4. Skewed Student-t distribution

| location | scale | shape | p | q | symbol |
|---|---|---|---|---|---|
| 0.0 | 1.0 | 0.0 | 2.0 | 2.0 | Solid black |
| -0.20 | 1.0 | -0.15 | 2.0 | 2.0 | Dotted Grey |
| -0.35 | 1.0 | -0.25 | 2.0 | 2.0 | Dashed Grey |

The solid back graph depicts a probability density function (PDF) that is not skewed which is typical of NSS code errors observed in a clean, multipath free environment. The increased skewness of the probability density functions (PDF) denoted by dotted and dashed lines respectively, highlight examples of increased presence of NSS code observation multipath errors. This illustrates how a PDF can be "shaped" to fit data with increased levels of skew and heavy tails.

In step s30, an estimation process, hereinafter referred to as "estimator", is operated. The estimator uses state variables and computes values of its state variables at least based on NSS code observations by the NSS receiver. Furthermore, the estimator operates under an assumption that errors in the NSS code observations follow the positively skewed distribution determined in step s20. This means that the skewed distribution impacts the estimation process by deweighting more of the code observations falling in the positive tail of observations than the code observations falling in the negative tail, thus reducing the influence of the code observations falling in the positive tail. In other words, based on a particular skewed distribution, a suitable skewed weighting or loss function can be selected and used in the estimator, which may for example be a Kalman filter, a least squares (LS) estimator, a maximum likelihood estimator, or a robust estimator.

The weighting function may control how much weight each NSS code observation gets when applied to the estimator. The weighting function may take as input a residual value and may output the weight value (between 0 and 1). Depending on the weighting function, large residuals generally get low weight, small residuals get large weight. Furthermore, large positive residuals are given less weight than correspondingly large negative residuals under a positively skewed weighting function.

The weighting function may change from one epoch to the next and vary with elevation angle. The estimator does not have to reset or change if the weighting function is altered.

The estimator is or comprises an algorithm, procedure, or process, or a piece of software, firmware, and/or hardware configured for implementing such an algorithm, procedure, or process, in which a set of state variables (or "state vector") is maintained over time, i.e. the values of the state variables are estimated based on measurements made over time. The measurements may comprise data representing the observed NSS signals, including NSS code observations by the NSS receiver. The estimator involves or comprises, in one embodiment, a Kalman filter, a LS estimator, a maximum likelihood estimator and/or a robust estimator. In one embodiment, the estimator involves an LS estimator with memory. In another embodiment, the estimator involves an LS estimator without memory, i.e. an LS estimator in which LS estimates are computed independently per epoch. The invention is, however, not limited to the use of Kalman filter(s), LS estimator(s), maximum likelihood estimator and/or robust estimator(s). Other estimation processes, filters, or filter techniques may be used.

The estimator's state variables may represent, for example, the position of the NSS receiver, an offset in the position of the NSS receiver relative to another position (the offset per se being therefore a relative position), an offset in the position of the NSS receiver relative to another epoch, the rate of change of the position, the rate of change of the offset in the position, a bias related to the NSS receiver, a bias related to any of the NSS satellites, a bias related to any of the satellite systems, a bias related to any of the NSS signals, the rate of change of any of the said biases, or any combination of the above.

The method described above with reference to Fig. 1 has been found to be generally beneficial for processing NSS code observations to produce accurate and reliable positioning results even in the presence of multipath. In one embodiment, producing reliable positioning results also implies providing information about the uncertainty of the estimated parameters, which is particularly important for high-integrity applications. By determining s20 a positively skewed distribution based on the multipath-related information, the NSS code data processing method accounts for the generally asymmetric error distribution of NSS code observations and therefore is better able to determine an accurate estimate of user location (i.e., the location of the NSS receiver), particularly in the presence of code multipath. Furthermore, the method tends to produce precision measures of the estimated position that are more representative of the true position error. In other words, it can be said that the method addresses the positive bias in the GNSS code observations, the positive bias being caused by multipath (and possibly other effects, such as atmospheric effects including ionospheric and tropospheric effects).

The method may be used in many NSS applications such as consumer devices including mobile phones, wearables, and in-vehicle navigation. It can also be used for high-integrity and/or high-accuracy differential GNSS applications.

In one embodiment, maximum likelihood estimates (see for example ref. [5], section 2.2 titled "M-estimates of location") for state parameters of the estimator are derived by employing a skewed weighting function or a skewed loss function for NSS code observations which is one of: (1) a positively skewed Huber function; (2) a positively skewed Danish function; (3) a positively skewed Welsh function; (4) a positively skewed bisquare function; and (5) a positively skewed function determined by a machine learning technique. Ref. [8] provides background on robust estimation, weighting functions, and influence functions. The Danish function is explained in ref. [8], section 2.3. These loss or weighting functions (1) to (5) are used to control maximum likelihood estimates computed from observations that have skewed distributions. In other words, skewed weighting functions can be used to compute maximum likelihood estimates that best suit GNSS code errors with skewed distributions.

Possibility (5), i.e. a positively skewed function determined by a machine learning technique, may allow the derivation on the fly the distribution of the errors in view of the input. The aim of the machine learning technique is to select the most appropriate skewed function for the prevailing environment. In one embodiment, this means generating a new skewed function depending on the prevailing environment. In another embodiment, this means selecting an existing function type depending on the prevailing environment. In yet another embodiment, this means, depending on the prevailing environment, either generating a new skewed function or selecting an existing function type.

In one embodiment, the method further comprises a procedure for determining a distribution based on obtainable multipath-related information, wherein, for any obtainable multipath-related information, the determined distribution is a positively skewed distribution.

In one embodiment, the method further comprises a procedure for determining a distribution based on obtainable multipath-related information, wherein, for some obtainable multipath-related information, the determined distribution is a skewed distribution, and, for other obtainable multipath-related information, the determined distribution is a non-skewed distribution. This embodiment is advantageous in that the method selects a positively skewed distribution for some classes of obtainable multipath-related information whereas the method selects a non-skewed distribution for other classes of obtainable multipath-related information. For example, if the estimated level of multipath is zero (e.g., countryside environment with an unobstructed view of the sky, or NSS receiver at the top of radio/TV mast), the determined distribution may be non-skewed. This means that the method according to the invention does not necessarily require that, for all obtainable multipath-related information, the determined distribution is skewed. In the case of GNSS code errors, the underlying distribution of errors in a multipath-free environment is Gaussian and the skewness approaches zero.

In one embodiment, the method is performed at least partially as part of a data post-processing process. In other words, the invention is not limited to a real-time operation. Rather, it may be applied for processing pre-collected data to determine a position, trajectory, or other information, in post-processing. For example, the observations may be retrieved from a set of data which was previously collected and stored; the processing may be conducted for example in an office computer long after the data collection and thus not in real-time.

In one embodiment (which may be referred to as "reverse-time, post-processing embodiment"), the method is performed at least partially in a post-processing manner (as explained in the preceding paragraph), the epochs are ordered and processed in reverse time. This reverse-time order means that the epoch's values are also increasing in reverse time, in accordance with the above-referred reverse time order, i.e. in a negative sense with respect to time. This embodiment reflects the possibility of running the method in reverse time. That is, for post-processing applications, the data, i.e. the NSS observables, can effectively be run backwards, and all of what is described in the present document can still be applied.

In one embodiment, the method is performed in both forward and reverse time post-processing. This may be advantageous in that, in a forward processing run, it takes time to resolve integer carrier phase ambiguities immediately following some tracking interruption, such as that caused by an overpass. These data segments can often be populated with integer resolved solutions when processing in reverse time.

In one embodiment, the method is performed using a forward-backward smoothing technique.

In one embodiment (not illustrated in the drawings), any one of the methods described with reference to Fig. 1, may comprise a step of observing NSS signals. That is, in this embodiment, steps s10, s20, and s30 are carried out at least by an NSS receiver, and the NSS receiver also observes NSS signals.

In another embodiment (not illustrated in the drawings), an NSS receiver observes NSS signals and the NSS receiver transmits data representing the observed NSS signals, or information derived therefrom, to another processing entity or set of processing entities in charge of carrying out steps s10, s20, and s30, which then receives the data representing the observed NSS signals, or information derived therefrom.

The data representing the observed NSS signals, or information derived therefrom, may for example be transmitted from the NSS receiver in the form of data packets, such as IP packets, through, for example, any one of, or a combination of, the Internet, a cellular network, and a suitable satellite link. The skilled person would, however, appreciate that other forms of wired or wireless transmission may be used, such as, and without being limited to, wireless transmissions based on Bluetooth, Wi-Fi, or Li-Fi. In one embodiment, the data representing the observed NSS signals is transmitted in real-time, i.e. as soon as available (in line with the above-mentioned definition of the term "real-time"). In one embodiment, the data representing the observed NSS signals is transmitted as a data stream in that messages containing said data are transmitted at regular or irregular intervals through the same communication medium or channel. The data representing the observed NSS signals may be encoded and/or encrypted prior to transmission.

Before discussing further embodiments of the invention, let us now briefly explain, in section A below, the context in which some embodiments of the invention have been developed, for a better understanding thereof, as well as some technical considerations that may be helpful for understanding some embodiments of the invention and problems addressed by these embodiments.

A. Context in which some embodiments of the invention have been developed, and other related considerations

GNSS code observations are frequently contaminated by multipath errors, particularly in tracking environments that contain reflective surfaces (e.g. where there are buildings, vehicles, etc.). Code multipath causes the satellite-user path length to be measured longer than the desired direct satellite-user distance, i.e. code multipath tends to cause a positive bias and an increase in measurement noise. Ionospheric and tropospheric delay may also contribute to the positive bias on GNSS code measurements. However, multipath tends to dominate code measurements and this effect generally presents one of the largest magnitude of all unmodeled code errors.

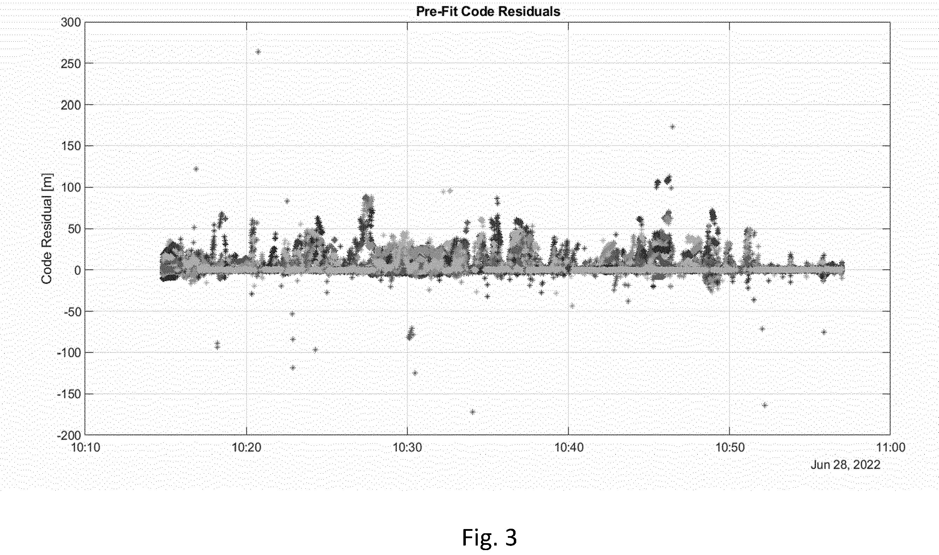

Fig. 3 shows GNSS code errors, i.e. the pre-fit code residuals, that arose for a vehicle drive test in July 2022 in an urban tracking environment, i.e. the downtown (city centre) of Munich, Germany. The pre-fit residuals are also called innovations or a *priori* residuals, and they are the difference between an observable and the estimated observable obtained from the predicted location of the user and known coordinates of the observed satellite. As can be observed, large positive code errors tend to occur more frequently than negative code errors, due mainly to the impact of code multipath.

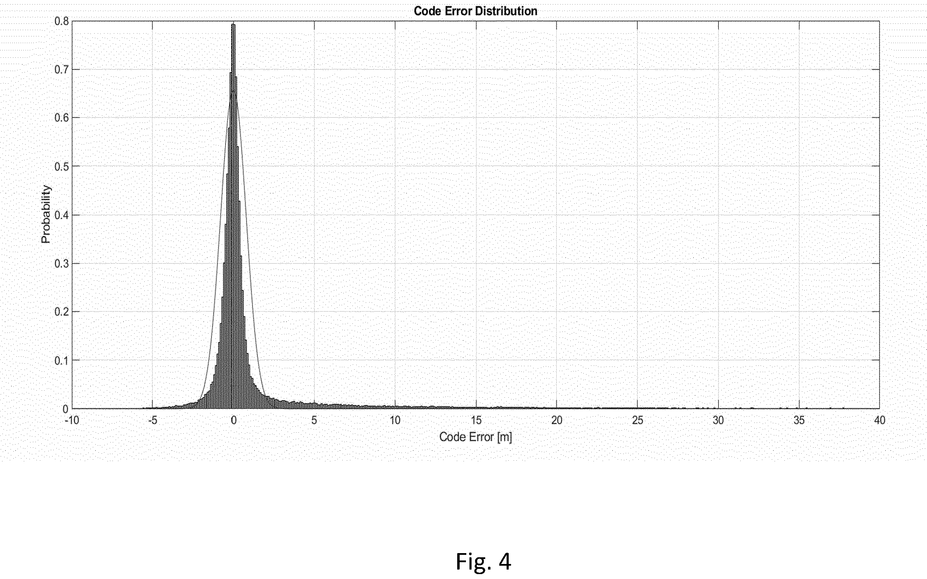

The distribution of the code errors, i.e. the code error probability density function, for the experiment described with reference to in Fig. 3 is shown in Fig. 4. In other words, Fig. 4 shows the equivalent normalized (i.e., Gaussian) GNSS code error distribution curve for an urban tracking environment (continuous line) compared to the actual data (vertical bars). The tail of the code error distribution is noticeably longer on the positive side and there are some extremely large (much larger than +4) positive errors.

While extended distribution tails appear in urban and suburban environments and under a canopy, even in a relatively clean tracking environment (e.g., on a highway) the tails of the distribution have been found to be longer (i.e., heavier) than a normal distribution, especially on the positive side.

Existing methods used for estimating user position, based on GNSS code observations, typically assume that the underlying code errors are approximately zero-mean and approximately follow a Gaussian distribution. Moreover, existing robust GNSS position estimation schemes also assume a symmetric distribution of code measurement errors.

Let us now describe further embodiments of the invention, together with considerations regarding how these embodiments may be implemented, for example, by software, hardware, firmware, or any combination of software, hardware, and firmware.

B. Further embodiments

As mentioned above, the method described with reference to Fig. 1 has been found to be generally beneficial for processing NSS code observations to produce accurate and reliable positioning results particularly in the presence of multipath. By determining s20 a positively skewed distribution based on the multipath-related information, the NSS code data processing method accounts for the generally asymmetric error distribution of NSS code observations and therefore is better able to determine an accurate estimate of user location (i.e., the location of the NSS receiver), particularly in the presence of code multipath. The method also tends to produce precision measures of the estimated position that are more representative of the true position error.

B.1 Theoretical background

Given the following general linear measurement model (i.e., general linear observation model):

$$y = Ax + v \tag{1}$$

where

y      is a (m x 1) vector of GNSS code measurements - in other words, this is a measurement vector;

x      is a (n x 1) state vector of estimated parameters (typically position and bias states for GNSS applications) - in other words, this is a state vector of unknown parameters;

$A$      is a (m x n) coefficient matrix relating the measurements to the estimated parameters;

$v$      is a (m x 1) vector of measurement residuals (errors).

Estimates for the parameters in x are obtained via the following optimization problem:

$$min\{F(x) = \sum_{i=1}^{m} \rho( v_i(x)/\sigma_i )\} \tag{2}$$

where:

$v_i(x)$      is a $i$-th residual vector element, based on state vector x;

$\sigma_i$      is the assumed i-th measurement standard deviation;

$v_i(x)/\sigma_i$      is the i-th normalized residual; and

$\rho$      is a nonnegative, convex, (piecewise) loss function that defines how residual values contribute to (i.e., affect) the summation in equation (2).

The function $\rho$ may be defined based on the natural logarithm of the probability density function (PDF) of the NSS code observations according to:

$$\rho(\chi) = -log_e f(\chi) \tag{2A}$$

where $f(\chi)$ is the PDF of the NSS code observations. Note that the PDF has a range (0,1) for all values of $\chi$, and therefore $\rho$ $(\chi)$ is always positive.

Rather than strictly define the $\rho$ function based on the PDF of the NSS code observations, it can alternatively be specified based on known loss (error) functions as described below.

The definition of function $\rho$ defines the properties of the estimator (here, the term "estimator" does not refer specifically to the estimation process of claim 1). Some known examples include the Huber function (ref. [5], p. 26; ref. [6], section 1.1), Hampel function (ref. [6], section 2.2), bisquare function (ref. [5], pp. 29-30; ref. [6], section 2.1), Welsh function (ref. [6], section 2.6), Minimax function, and Tukey function. Each function is defined to produce various characteristics of a robust estimation scheme. Most functions are defined on the assumption that the majority of errors follow a Gaussian distribution, with the impact of larger errors being heavily discounted. When the measurement errors are free from outliers, the solution approaches that obtained with the method of least squares.

There is no closed-form solution for the minimization problem defined in equation (2). A solution to the minimization problem defined in equation (2) can be found iteratively via an optimization algorithm such as the Newton-Raphson method (see ref. [7]). In this case $\rho(.)$ and its first derivative $\rho'(.) = \psi(.)$ are used to converge on the solution for x.

An iteratively reweighted least squares process offers an alternative, albeit less efficient method for finding a solution to the minimization problem, i.e. for computing x. In this case, weights are assigned to measurements based on their normalized residual. Weighting functions are typically described in terms of $\rho(.)$ and its derivatives. This iteratively reweighted least squares process is described in section B.2.

B.2 Computation method

The iteratively reweighted least squares scheme can be summarized as follows:

1. Compute the approximate values for the unknown parameters based on all observations using the method of least squares. Note that elevation-dependent weighting, and/or SNR weighting may be used to obtain more accurate estimates of the approximate values for the unknown parameters in this step. Furthermore, elevation- and/or SNR-dependent weights may be used as the starting point for measurement weights computed in step 3, below.

$$x = (A'A)^{-1}A'y \qquad (3)$$

2. Compute the measurement residual vector (v) based on the current state estimates (x):

$$v = y - Ax \qquad (4)$$

3. Generate measurement weights based on the normalized residuals computed above and the selected weighting function:

$$w_i(x) = f(v_i(x)/\sigma_i) \qquad (5)$$

and populate the corresponding diagonal weight matrix $W(x)$:

$$W(x) = diag(w_i(x)) \qquad (6)$$

4. Form the weighted least squares solution to find the new state vector estimates:

$$x_{new} = (A'W(x)A)^{-1}A'W(x)v \qquad (7)$$

5. Check for convergence of the state estimates and if not converged, loop back to step 2. The state estimates are considered converged once their values have stabilized to a preset threshold such as 0.1 mm.

The robustness of the aforementioned scheme, its efficiency and accuracy, is reliant on the definition of weights assigned to observations.

The iteratively reweighted least squares scheme outlined above may also be applied in an analogous manner to the measurement update step of a Kalman filter, as follows:

1. Run the standard time prediction step of the Kalman filter to produce the predicted state vector ($\tilde{x}$), and the predicted state covariance matrix ($\tilde{P}$), for the current measurement epoch.

2. Initialize the iterated state vector ($\bar{x}$), based on the predicted state vector ($\tilde{x}$):

$$\bar{x} = \tilde{x} \tag{8}$$

3. Compute the measurement residual vector (v) based on the iterated state vector:

$$v = y - A\bar{x} \tag{9}$$

4. Generate measurement weights based on the normalized residuals computed above and the selected weighting function:

$$w_i(x) = f(v_i(x)/\sigma_i) \tag{10}$$

and populate the corresponding diagonal measurement noise covariance matrix R:

$$R = diag(1 / w_i(x)) \tag{11}$$

5. Compute the corrections to the state vector for this iteration:

$$\overline{\Delta x} = K v \tag{12}$$

where the Kalman gain matrix K is given by:

$$K = \tilde{P} A' [A \tilde{P} A' + R]^{-1} \tag{13}$$

The updated state vector for the current iteration is given by:

$$\bar{x}_{new} = \bar{x} + \overline{\Delta x} \tag{14}$$

6. Convergence of the iteration loop is considered complete once the values in $\bar{x}$ have stabilized to a preset tolerance (say 0.1 mm). If convergence has not been met, processing returns to step 3 above.

7. Once convergence is achieved, the measurement updated state vector (i) and state covariance matrix (P) are computed from:

$$\hat{x} = \bar{x} \tag{15}$$

$$\hat{P} = [I - K A]\tilde{P} \tag{16}$$

B.3 Skew weighting and loss functions

Some embodiments of the invention focus on the definition of skew weighting functions w(x), skew loss functions $\rho(.)$, and derivative functions $\psi(.)$ (with $\psi(.) = \rho'(.)$). Some embodiments of the invention focus on the empirical derivation of these weighting and loss functions.

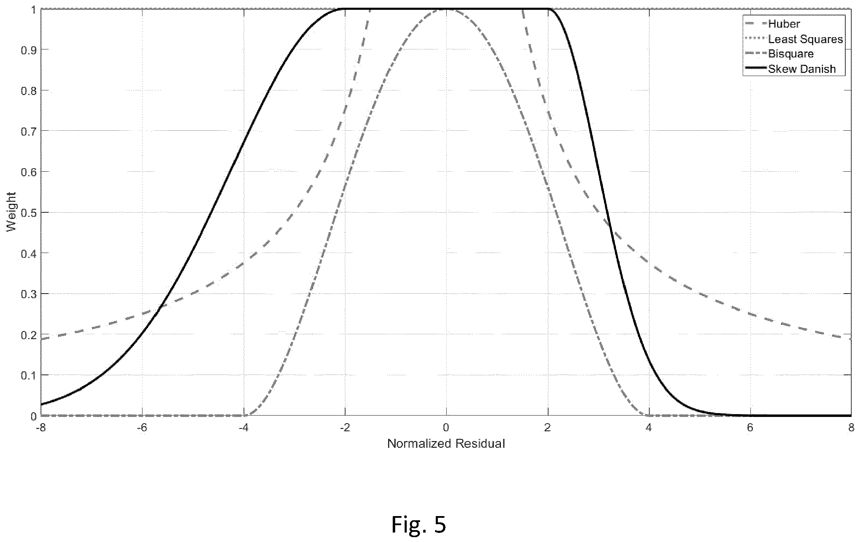

Fig. 5 presents three examples of symmetric weighting functions: least-squares (note: the least-squares function corresponds to weight value = 1, where "≡" means identical to 1 for all values of x); Huber; bisquare; and an example of a new skewed weighting function (labelled "Skew Danish"). The Skew-Danish weighting function has the following form:

$$w(x) = f(x) = \begin{cases} 1 & for & k1 \leq x \leq k2; \\ e^{-a1(|x|+k1)^2} & for & x < k1; \\ e^{-a2(|x|-k2)^2} & for & x > k2; \end{cases}$$

where the constants $k1$ and $k2$ define the range at which the weighting function is equal to 1. Parameters $a1$ and $a2$ define the rate of decay of the function for respectively negative and positive values of $x$. For the example above: $k1 = -2$; $k2 = +2$; $a1 = 0.1$; and $a2 = 0.5$.

For observation residuals that fall within the range $k1$ to $k2$, the estimator will provide effectively least-squares estimation. Outside of this range, the observations will be de-weighted. When $a2$ is larger than $a1$, positive residuals will be given less weight than negative residuals.

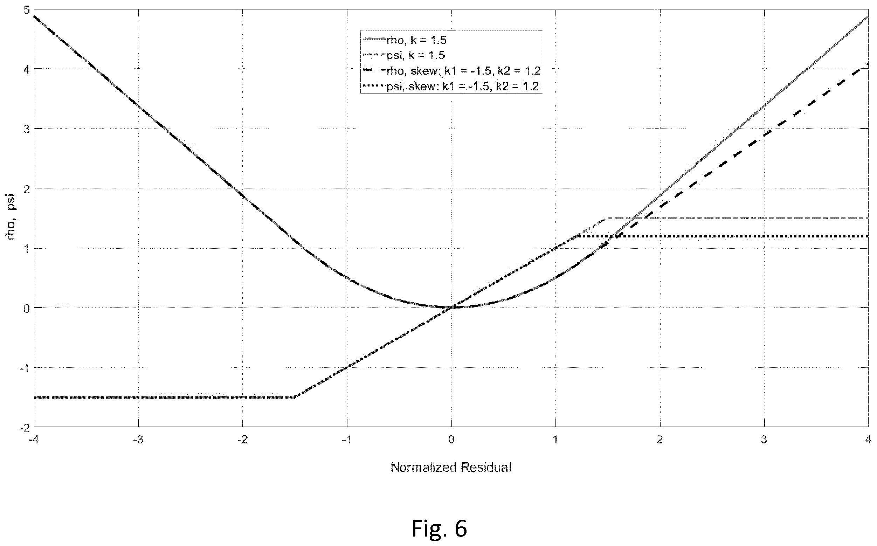

Corresponding skew loss functions can likewise be derived for the Huber, Welsh, and bisquare functions. Specifically, new skew $\rho(.)$ and $\psi(.)$ Huber, Welsh, and bisquare loss functions are proposed below against their symmetric equivalents in Tables 5 to 7 and are illustrated in Figs. 6, 7, and 8, respectively.

Table 5 presents a symmetric Huber loss function and a corresponding skewed Huber loss function and is correspondingly illustrated in Fig. 6. Specifically, in Fig. 6, parameter $k$ is equal to 1.5, parameter $k1$ is equal to -1.5, and parameter $k2$ is equal to 1.2. The symmetric Huber $\rho(.)$ loss function follows a quadratic behavior for the values of $x$ in the range from -1.5 and 1.5. In that range of values, the symmetric Huber $\rho(.)$ function corresponds to a least-squares loss function. In contrast, the skewed Huber loss function $\rho(.)$ follows a quadratic behavior only for the values of $x$ in the range from -1.5 and 1.2. In that more limited range of values, the skewed Huber $\rho(.)$ function corresponds to a least-squares loss function. The skewed Huber $\rho(.)$ function effectively reduces the influence on the estimated parameters of large positively biased observations more than negatively biased observations.

Table 5. Symmetric Huber functions and corresponding skewed Huber functions

| Huber: | | Skew Huber: | |
|---|---|---|---|
| $\rho(x) = \begin{cases} \dfrac{1}{2}x^2 \end{cases}$ | $if \, |x| \leq k$ | $\rho(x) = \begin{cases} \dfrac{1}{2}x^2 \end{cases}$ | $if \, k1 \leq x \leq k2$ |
| $\begin{cases} k\left(|x| - \dfrac{k}{2}\right) \end{cases}$ | $if \, |x| > k$ | $\begin{cases} k1\left(x - \dfrac{k1}{2}\right) \end{cases}$ | $if \, x < k1$ |
| | | $\begin{cases} k2\left(x - \dfrac{k2}{2}\right) \end{cases}$ | $if \, x > k2$ |
| $\psi(x) = \begin{cases} x \end{cases}$ | $if \, |x| \leq k$ | $\psi(x) = \begin{cases} x \end{cases}$ | $if \, k1 \leq x \leq k2$ |
| $\begin{cases} k \, sign(x) \end{cases}$ | $if \, |x| > k$ | $\begin{cases} k1 \end{cases}$ | $if \, x < k1$ |
| | | $\begin{cases} k2 \end{cases}$ | $if \, x > k2$ |

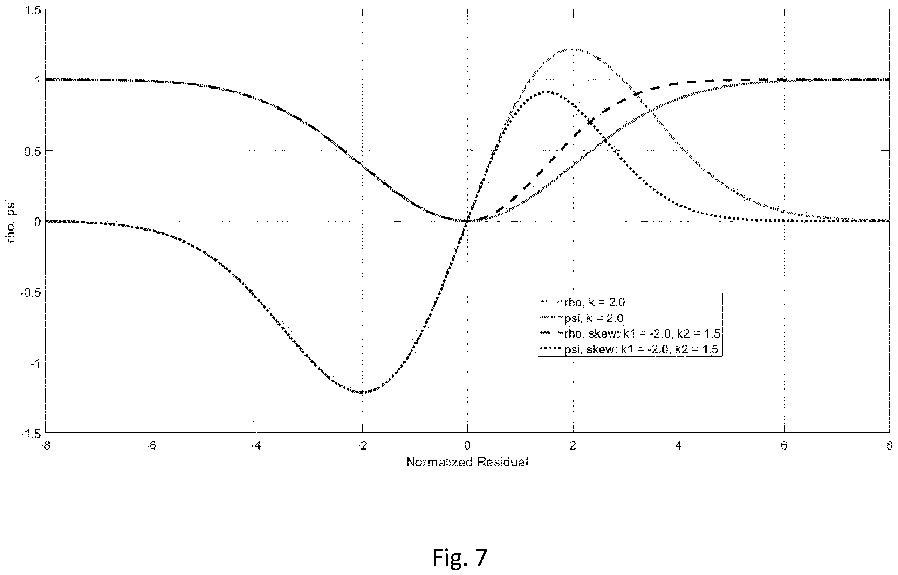

Table 6 presents a symmetric Welsh functions and corresponding skewed Welsh functions and is correspondingly illustrated in Fig. 7.

Table 6. Symmetric Welsh functions and corresponding skewed Welsh functions

| Welsh | Skew Welsh |
|---|---|
| $\rho(x) = 1 - exp\left(-\left(\dfrac{x}{k}\right)^2 / 2\right)$ | $\rho(x) = \begin{cases} 1 - exp\left(-\left(\dfrac{x}{k1}\right)^2 / 2\right) & if \, x \leq 0 \\ 1 - exp\left(-\left(\dfrac{x}{k2}\right)^2 / 2\right) & if \, x > 0 \end{cases}$ |

(continued)

| Welsh | Skew Welsh |
|---|---|
| $\psi(x) = x\,exp\left(-\left(\frac{x}{k}\right)^2/2\right)$ | $\psi(x) = \{x\,exp\left(-\left(\frac{x}{k1}\right)^2/2\right) \quad if\ x \leq 0$ <br> $\{x\,exp\left(-\left(\frac{x}{k2}\right)^2/2\right) \quad if\ x > 0$ |

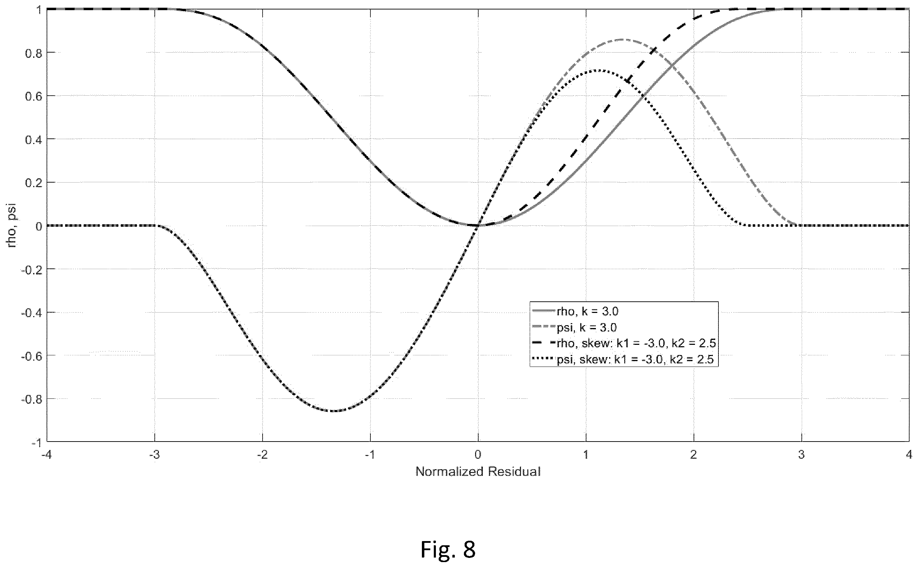

Table 7 presents a symmetric bisquare functions and corresponding skewed bisquare functions and is correspondingly illustrated in Fig. 8.

Table 7. Symmetric bisquare functions and corresponding skewed bisquare functions

| Bisquare | Skew Bisquare |
|---|---|
| $\rho(x) = \{1-\left(1-\left(\frac{x}{k}\right)^2\right)^3 \quad if\ |x| \leq k$ <br> $\{1 \qquad\qquad if\ |x| > k$ | $\rho(x) = \{1-\left(1-\left(\frac{x}{k1}\right)^2\right)^3 \quad if\ k1 \leq x \leq 0$ <br> $\{1-\left(1-\left(\frac{x}{k2}\right)^2\right)^3 \quad if\ 0 \leq x \leq k2$ <br> $\{1 \qquad\qquad if\ x < k1, x > k2$ |
| $\psi(x) = \{x\left(1-\left(\frac{x}{k}\right)^2\right)^2 \quad if\ |x| \leq k$ <br> $\{0 \qquad\qquad if\ |x| > k$ | $\psi(x) = \{x\left(1-\left(\frac{x}{k1}\right)^2\right)^2 \quad if\ k1 \leq x \leq 0$ <br> $\{x\left(1-\left(\frac{x}{k2}\right)^2\right)^2 \quad if\ 0 \leq x \leq k2$ <br> $\{0 \qquad\qquad if\ x < k1, x > k2$ |

### B.4 Real-time estimation of code-error distributions

High-precision carrier-phase based NSS yields cm-level positioning accuracy. With the position of the user known to cm-level, and the coordinates to each satellite known, the theoretical user-satellite ranges may be compared with observed code observations to yield estimates of GNSS code errors. Furthermore, the tracking environment may be automatically classified by studying the distribution of code errors over time.

As shown above, when the code error distribution is known, it is possible to use this information in a robust estimation scheme to determine user location and the precision of the estimated parameters.

### B.5 Machine-learning approach to measurement weighting

With machine learning, it is possible to train an algorithm to weight code measurements appropriately such that an optimal solution for the unknown position related parameters is obtained.

The training process may involve the following:

1. Collect GNSS measurement data (y) in all indicative tracking environments;
2. Use a truthing system to establish the accurate coordinates of the GNSS receiver at each GNSS measurement epoch;
3. At each data epoch, compute the GNSS measurement residuals $v$, as specified in equation (1), with ($x_{true}$) = known coordinates of the user;
4. Using equation (3), the following expression is used for the optimization of the weighting function $W(x)$:

$$\delta x'\,\delta x\ =\ min \qquad\qquad (17)$$

with

$$\delta x = (A'W(x)A)^{-1} A'W(x)v - x_{true} \qquad (18)$$

A more general optimization function should also include a measure of the precision of the estimated parameters. That is $\delta x' \, \Omega^{-1} \, \delta x = min$; with $\Omega$, the covariance matrix of the estimated parameters.

Given a sufficiently large and representative training data set, the weighting function W(.) can be established and henceforth be applied generally to GNSS code estimation problems. Note that weighting functions are related to the GNSS receiver / antenna equipment, installation setup, satellite elevation angle and general tracking environments. The receiver and antenna hardware indeed affects the signal gain and the ability to exclude or reduce the impact of multipath.

Given a sufficiently large and representative sample of training data, it is possible to derive a weighting function that can subsequently be applied generally for optimal estimation of the state parameters.

System

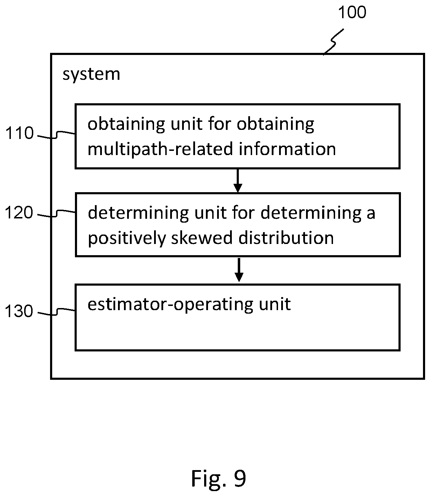

Fig. 9 schematically illustrates a system 100 in one embodiment of the invention. System 100 comprises an NSS receiver and/or a processing entity capable of receiving data from the NSS receiver. The system operates to estimate parameters derived from NSS signals useful to, i.e. suitable to, determine a position. The NSS receiver is configured for observing at least one NSS signal from each of a plurality of NSS satellites over multiple epochs. System 100 comprises an obtaining unit 110, a determining unit 120, and an estimator-operating unit 130.

Obtaining unit 110 is configured for obtaining information, here referred to as "multipath-related information", indicative of an expected or estimated level of multipath where the NSS receiver antenna(s) is located. Determining unit 120 is configured for determining a positively skewed distribution based on the multipath-related information. Estimator-operating unit 130 is configured for operating an estimation process, hereinafter referred to as "estimator", wherein the estimator uses state variables, computes the values of its state variables at least based on NSS code observations by the NSS receiver, and operates under an assumption that errors in the NSS code observations follow the determined positively skewed distribution.

In one embodiment, a vehicle comprises a system 100 as described above. The vehicle may for example be an autonomous vehicle such as a self-driving vehicle, a driverless vehicle, a robotic vehicle, a highly automated vehicle, a partially automated vehicle, an aircraft, or an unmanned aerial vehicle. Alternatively or additionally, the vehicle may for example be at least one of (the list of possibilities is not meant to be exhaustive): a motor vehicle, a car, a truck, a bus, a train, a motorcycle, a tractor, an agricultural equipment, an agricultural tractor, a combine harvester, a crop sprayer, a forestry equipment, a construction equipment, and a grader. Examples of applications may include machine guidance, construction work, operation of unmanned aerial vehicles (UAV), also known as drones, and operation of unmanned surface vehicles/vessels (USV).

A mobile device may also comprise a NSS receiver as described above. The mobile device may be any type of communication terminal such as, for example, a mobile phone, a smartphone, a laptop, a wearable, or any other type of portable device. The mobile device may be able to use or display positions.

Additional remarks

Any of the above-described methods and their embodiments may be implemented, at least partially, by means of a computer program or a set of computer programs. The computer program(s) may be loaded on an apparatus or device, such as for example a server (which may comprise one or a plurality of computers), an NSS receiver (running on a rover station, on a reference station, or within a vehicle) and/or an NSS receiver chipset for mobile phones or automotive applications. Therefore, the invention also relates, in some embodiments and/or aspects, to a computer program or set of computer programs, which, when carried out on an apparatus as described above, such as for example a server, an NSS receiver (running on a rover station, on a reference station, or within a vehicle) or a server, carries out any one of the above-described methods and their embodiments.

The invention also relates, in some embodiments, to a computer-readable medium or a computer-program product including the above-mentioned computer program. The computer-readable medium or computer-program product may for instance be a magnetic tape, an optical memory disk, a magnetic disk, a magnetooptical disk, an SSD, a CD-ROM, a DVD, a CD, a flash memory unit, or the like, wherein the computer program is permanently or temporarily stored. In some embodiments, a computer-readable medium (or to a computer-program product) has computer-executable instructions for carrying out any one of the methods of the invention.

In one embodiment, a computer program as claimed may be delivered to the field as a computer program product, for example through a firmware or software update to be installed on receivers already in the field. This applies to each of the above-described methods and systems.

NSS receivers may include one or more antennas, configured to receive the signals at the frequencies broadcasted by the satellites, processor units, one or a plurality of accurate clocks (such as crystal oscillators), one or a plurality of central processing units (CPU), one or a plurality of memory units (RAM, ROM, flash memory, or the like), and a display for displaying position information to a user.

Where the terms "obtaining unit", "determining unit", "estimator-operating unit", and the like are used herein as units (or sub-units) of an apparatus (such as an NSS receiver), no restriction is made regarding how distributed the constituent parts of a unit (or sub-unit) may be. That is, the constituent parts of a unit (or sub-unit) may be distributed in different software or hardware components or devices for bringing about the intended function. Further, the units may be gathered together for performing their functions by means of a combined, single unit (or sub-unit).

The above-mentioned units and sub-units may be implemented using hardware, software, firmware, any combination of hardware, software, and firmware, pre-programmed ASICs (application-specific integrated circuits), etc. A unit may include a central processing unit (CPU), a storage unit, input/output (I/O) units, network connection devices, etc.

Although the present invention has been described on the basis of detailed examples, the detailed examples only serve to provide the skilled person with a better understanding and are not intended to limit the scope of the invention. The scope of the invention is defined by the appended claims.

Abbreviations:

| | |
|---|---|
| ASIC | application-specific integrated circuit |
| BDS | BeiDou Navigation Satellite System |
| CD | compact disc |
| CD-ROM | compact disk read-only memory |
| CNR | carrier-to-noise ratio |
| CPU | central processing unit |
| DVD | digital versatile disc |
| GNSS | global navigation satellite system |
| GPS | Global Positioning System |
| I/O | input/output |
| IP | Internet Protocol |
| LEO-PNT | Low Earth Orbit-Positioning, Navigation and Timing |
| LS | least squares |
| MEO-PNT | Medium Earth Orbit-Positioning, Navigation, and Timing |
| NAVIC | NAVigation with Indian Constellation |
| NSS | navigation satellite system |
| PDF | probability density function |
| PRN | pseudo-random noise |
| QZSS | Quasi-Zenith Satellite System |
| RAM | random-access memory |
| ref. | reference |
| refs. | references |
| RNSS | regional navigation satellite system |
| ROM | read-only memory |
| SNR | signal-to-noise ratio |
| SSD | solid-state disk |
| UAV | unmanned aerial vehicle |
| USV | unmanned surface vehicle or vessel |

References:

[1] Hofmann-Wellenhof, B., et al., "GNSS, Global Navigation Satellite Systems, GPS, GLONASS, Galileo, & more", Springer-Verlag Wien, 2008.
[2] Jan Van Sickle, "Two Types of Observables | GEOG 862: GPS and GNSS for Geospatial Professionals", John A.

Dutton e-Education Institute, College of Earth and Mineral Sciences, The Pennsylvania State University, retrieved from https://www.e-education.psu.edu/geog862/node/1752 on November 8, 2021.

[3] EP 3 035 080 A1 titled "Navigation satellite system positioning involving the generation of correction information" (Trimble ref.: A4396).

[4] EP 3 130 943 A1 titled "Navigation satellite system positioning involving the generation of tropospheric correction information" (Trimble ref.: 15072-EPO).

[5] Maronna, R.A., Martin, R.D., Yohai, V.J. 2006, Robust Statistics, Theory and Methods, John Wiley & Sons, West Sussex, England, ISBN: 0-470-01092-4.

[6] Manuel Koller and Martin Mächler, Definitions of ψ-Functions Available in Robustbase, January 27, 2024.

[7] Chang, XW., Guo, Y. 2005, Huber's M-estimation in relative GPS positioning: computational aspects. J Geodesy 79, pp. 351-362.

[8] Gašincová, S., Gašinec, J., Weiss, G., Labant, S.: Application of robust estimation methods for the analysis of outlier measurements. GeoScienceEngineering. Vol. 57, No. 3. 2001. pp. 14-29.

[9] Ashour, SK, Abdel-hameed, M.A., 2010, Approximate skew normal distribution, Journal of Advanced Research, Cairo University, 1, pp. 341-350.

[10] Mudholkar, Govind, S Hutson, A.D. [2000] The epsilon-skew-normal distribution for analysing near-normal data, Journal of Statistical Planning and Inference. 83(2): 291-309 doi: 10.1016/s0378-3758(99)00096-8. ISSN 0378-3757

[11] Skewed generalized t distribution, https://en.wikipedia.org/w/index.php?title=Skewed_generalized t distribution&oldid =1193633418 (last visited July 31, 2024).

## Claims

1. Method, carried out by at least one of a navigation satellite system, hereinafter abbreviated as "NSS", receiver and a processing entity capable of receiving data from the NSS receiver, for estimating parameters useful to determine a position, the NSS receiver observing NSS signals from each of a plurality of NSS satellites, the method comprising:

   obtaining (s10) information, hereinafter referred to as "multipath-related information", indicative of an expected or estimated level of multipath where the NSS receiver antenna or antennas is or are located;
   determining (s20) a positively skewed distribution based on the multipath-related information; and
   operating (s30) an estimation process, hereinafter referred to as "estimator", wherein the estimator uses state variables, computes the values of its state variables at least based on NSS code observations by the NSS receiver, and operates under an assumption that errors in the NSS code observations follow the determined positively skewed distribution.

2. Method of claim 1, wherein the obtained multipath-related information is or is based on at least one of:

   a signal-to-noise ratio;
   a carrier-to-noise ratio;
   code-carrier residuals;
   code-code residuals; and
   a measure of distortion in a correlation function formed from a received code signal and a local replica.

3. Method of claim 1 or 2, wherein the multipath-related information comprises information indicative of a type of environment where the NSS receiver antenna or antennas is or are located.

4. Method of claim 3, wherein the type of environment is one among a group of types comprising at least: urban, suburban, and countryside.

5. Method according to any one of the preceding claims, wherein obtaining the multipath-related information comprises environment classification using at least one of:

   data from a camera; and
   a three-dimensional scene model.

6. Method according to any one of the preceding claims, wherein obtaining the multipath-related information comprises, or further comprises, using input from a user.

7.  Method according to any one of the preceding claims, wherein the positively skewed distribution is one of:

    a skewed normal distribution;
    a skewed student t-distribution;
    a skewed Laplace distribution;
    a skewed Cauchy distribution; and
    a skewed empirical distribution determined by a machine-learning technique.

8.  Method according to any one of the preceding claims, wherein maximum likelihood estimates for state parameters of the estimator are derived by employing a skewed weighting function or a skewed loss function for NSS code observations which is one of:

    a skewed Huber function;
    a skewed Danish function;
    a skewed Welsh function;
    a skewed bisquare function; and
    a skewed function determined by a machine learning technique.

9.  Method according to any one of the preceding claims, wherein the estimator comprises at least one of a Kalman filter, a least squares estimator, a maximum likelihood estimator, and a robust estimator.

10. Method according to any one of the preceding claims, further comprising a procedure for determining a distribution based on obtainable multipath-related information, wherein, for any obtainable multipath-related information, the determined distribution is a positively skewed distribution.

11. Method according to any one of claims 1 to 9, further comprising a procedure for determining a distribution based on obtainable multipath-related information, wherein,

    for some obtainable multipath-related information, the determined distribution is a positively skewed distribution, and,
    for other obtainable multipath-related information, the determined distribution is a non-skewed distribution.

12. System (100) comprising at least one of a navigation satellite system receiver, hereinafter abbreviated as "NSS receiver", and a processing entity capable of receiving data from the NSS receiver, the system being for estimating parameters useful to determine a position, the NSS receiver observing NSS signals from each of a plurality of NSS satellites, and the system being configured for:

    obtaining information, hereinafter referred to as "multipath-related information", indicative of an expected or estimated level of multipath where the NSS receiver antenna or antennas is or are located;
    determining a positively skewed distribution based on the multipath-related information; and
    operating an estimation process, hereinafter referred to as "estimator", wherein the estimator uses state variables, computes the values of its state variables at least based on NSS code observations by the NSS receiver, and operates under an assumption that errors in the NSS code observations follow the determined positively skewed distribution.

13. Vehicle comprising a system according to claim 12, the vehicle preferably being at least one of: a motor vehicle, an agricultural tractor, a combine harvester, a crop sprayer, a construction equipment, a truck, a bus, a train, a motorcycle, an autonomous vehicle, a self-driving vehicle, a driverless vehicle, a robotic vehicle, a highly automated vehicle, an aircraft, and an unmanned aerial vehicle.

14. Computer program or set of computer programs comprising computer-readable instructions configured, when executed on a computer or set of computers, to cause the computer or set of computers to carry out the method according to any one of claims 1 to 11.

15. Computer program product or storage mediums comprising a computer program or set of computer programs according to claim 14.

s10 —⌐ obtaining multipath-related information

s20 —⌐ determining a positively skewed distribution

s30 —⌐ operating estimator based on NSS code observations and under an assumption that errors in the NSS code observations follow the determined skewed distribution

Fig. 1

Fig. 2

Fig. 3

EP 4 692 856 A1

Fig. 4

Fig. 5

EP 4 692 856 A1

Fig. 6

Fig. 7

Fig. 8

Fig. 9

**EP 4 692 856 A1**

Europäisches Patentamt
European Patent Office
Office européen des brevets

# EUROPEAN SEARCH REPORT

**Application Number**

EP 24 19 3516

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2008/309553 A1 (CHANSARKAR MANGESH [US] ET AL) 18 December 2008 (2008-12-18) <br> * figures 1, 3, 5-8 * <br> * paragraphs [0022] - [0041] * <br> ----- | 1-15 | INV. <br> G01S19/39 <br> G01S19/42 <br> G01S5/00 |
| X | ZHONG ET AL: "Asymmetric Positioning for NLOS Mitigation", <br> GNSS 2023 - PROCEEDINGS OF THE 36TH INTERNATIONAL TECHNICAL MEETING OF THE SATELLITE DIVISION OF THE INSTITUTE OF NAVIGATION (ION GNSS+ 2023), THE INSTITUTE OF NAVIGATION, 8551 RIXLEW LANE SUITE 360 MANASSAS, VA 20109, USA, <br> 15 September 2023 (2023-09-15), pages 1905-1927, XP056018507, <br> * figures 1-3 * <br> * sections: <br> II.2 NLOS Detection and Mitigation; <br> III. Proposed Methods; <br> IV. Experiments; <br> V. Conclusions. * <br> ----- | 1-15 | |

**TECHNICAL FIELDS SEARCHED (IPC)**

G01S

The present search report has been drawn up for all claims

| Place of search | Date of completion of the search | Examiner |
|---|---|---|
| Munich | 20 January 2025 | Tancredi, Urbano |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

28

## ANNEX TO THE EUROPEAN SEARCH REPORT
## ON EUROPEAN PATENT APPLICATION NO.

EP 24 19 3516

This annex lists the patent family members relating to the patent documents cited in the above-mentioned European search report.
The members are as contained in the European Patent Office EDP file on
The European Patent Office is in no way liable for these particulars which are merely given for the purpose of information.

20-01-2025

| Patent document cited in search report | Publication date | Patent family member(s) | Publication date |
|---|---|---|---|
| US 2008309553 A1 | 18-12-2008 | DE 102009043882 A1 | 11-03-2010 |
| | | GB 2462926 A | 03-03-2010 |
| | | US 2008309553 A1 | 18-12-2008 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 3035080 A1

- EP 3130943 A1

**Non-patent literature cited in the description**

- **HOFMANN-WELLENHOF, B et al.** GNSS, Global Navigation Satellite Systems, GPS, GLONASS, Galileo, & more. Springer-Verlag Wien, 2008
- Two Types of Observables | GEOG 862: GPS and GNSS for Geospatial Professionals. **JAN VAN SICKLE**. John A. Dutton e-Education Institute, College of Earth and Mineral Sciences. The Pennsylvania State University, 08 November 2021
- **MARONNA, R.A** ; **MARTIN, R.D.** ; **YOHAI, V.J.** Robust Statistics, Theory and Methods. John Wiley & Sons, 2006
- **MANUEL KOLLER** ; **MARTIN MÄCHLER**. *Definitions of $\psi$-Functions Available in Robustbase*, 27 January 2024
- **CHANG, XW** ; **GUO, Y.** Huber's M-estimation in relative GPS positioning: computational aspects. *J Geodesy*, 2005, vol. 79, 351-362

- **GAŠINCOVÁ, S.** ; **GAŠINEC, J.** ; **WEISS, G.** ; **LABANT, S.** Application of robust estimation methods for the analysis of outlier measurements. *GeoScienceEngineering*, 2001, vol. 57 (3), 14-29
- Approximate skew normal distribution. **ASHOUR, SK** ; **ABDEL-HAMEED, M.A**. Journal of Advanced Research. Cairo University, 2010, vol. 1, 341-350
- **MUDHOLKAR** ; **GOVIND** ; **S HUTSON, A.D**. The epsilon-skew-normal distribution for analysing near-normal data. *Journal of Statistical Planning and Inference.*, 2000, vol. 83 (2), ISSN 0378-3757, 291-309